# NEUE EUROPÄISCHE PATENTSCHRIFT

(11) **EP 0 511 540 B2**
(45) Veröffentlichungstag und Bekanntmachung des Hinweises auf die Entscheidung über den Einspruch: **30.10.2002**
(45) Hinweis auf die Patenterteilung: 10.07.1996
(21) Anmeldenummer: 92106382.2
(22) Anmeldetag: 14.04.1992
(51) Int. Cl.: C08B 11/193

(54) **Wasserlösliche Sulfoethylcelluloseether mit sehr guter Lösungsqualität und Verfahren zu ihrer Herstellung**
Water-soluble sulfoethyl ethers of cellulose with very good solubility and process for their preparation
Sulfoéthyléthers de la cellulose solubles dans l'eau ayant de très bonne qualité de solubilité et procédé de préparation

(30) Priorität: 27.04.1991 DE 4113892
(43) Veröffentlichungstag der Anmeldung: 04.11.1992
(73) Patentinhaber: Wolff Walsrode Aktiengesellschaft, D-29655 Walsrode (DE)
(72) Erfinder: Kniewske, Reinhard, Dr., W-3032 Fallingbostel (DE); Kiesewetter, René, Dr., W-3040 Soltau-Ahlften (DE); Szablikowski, Klaus, Dr., W-3030 Walsrode (DE)
(74) Vertreter: Pettrich, Klaus-Günter, Dr.

(56) Entgegenhaltungen:
- EP-A- 0 319 865
- EP-A- 0 470 444
- EP-A- 0 487 988
- US-A- 2 132 181
- US-A- 2 476 331
- US-A- 2 580 352
- US-A- 2 591 748

## Beschreibung

Die Erfindung betrifft wasserlösliche Methylsulfoethylcelluloseether (MSEC) mit sehr guter Lösungsqualität, sowie ein Verfahren zu ihrer Herstellung und die Verwendung dieser Produkte als Verdickungs-, Dispergier- oder Bindemittel. Der DS-Sulfoethyl beträgt < 0,35 (DS = durchschnittlienen Substitutionsgrad).

Die Herstellung von Sulfoethylcellulosederivaten ist an sich bekannt (siehe K. Engelskirchen in Houben-Weyl's "Makromolekulare Stoffe", Band E 20/III, Seite 2082, Herausgeber A. Barth und J. Falbe, Georg-Thieme-Verlag, Stuttgart/New York [1987]).

Nach US-PS 2,132,181 werden Sulfoethylcelluloseether (SEC) im Kneter hergestellt. Bei diesem Verfahren wird mit extremen Überschüssen an Lauge gearbeitet, was einerseits zu erheblichen Nebenreaktionen führt und andererseits die Herstellung dieser Produkte äußerst unwirtschaftlich macht.Darüber hinaus sind Umsetzungen im Laborkneter erfahrungsgemäß mit überaus schlechten Lösungsqualitäten, d.h. hohen Faser- und Gelkörperanteilen verbunden.

In SU 757 540 wird eine SEC in zwei Stufen hergestellt, wobei in der ersten Stufe eine Alkalicellulose durch Umsetzung von Cellulose mit Natronlauge bereitgestellt wird. Die so aktivierte Cellulose wird vor der eigentlichen Veretherung abgepreßt. Hierbei sind spezielle Hochdruckwerkzeuge erforderlich, die wiederum den Abpreßvorgang technisch sehr aufwendig gestalten. Dadurch, daß die Alkalisierung unter Luftzutritt erfolgt, kommt es zu einem alkalisch-oxidativen Abbau der Cellulosekette, so daß nach diesem Verfahren schließlich nur niedrigviskose Veretherungsprodukte erhalten werden können.

JP 8 218 701 beschreibt die Herstellung von SEC unter stufenweiser Zugabe von 2-chlorethansulfonsaurem Natrium in einem inerten Slurrymedium. Der geringe Substitutionsgrad von DS = 0,33 führt jedoch zu einer Transmission von lediglich 80 %, was sich in einem hohen Anteil von nicht gelösten Teilchen widerspiegelt.

CS 200 676 beschreibt ein Verfahren zur Herstellung von Sulfoethylcelluloseethern in Dioxan, Aceton, Benzol, Isopropanol bzw. n-Propanol. Die Veretherung mit Natriumvinylsulfonat findet hierbei bei 40 - 65°C statt. Der Substitutionsgrad liegt bei DS = 0,3 - 0,7. Über die Ausbeute und die Lösungsqualität der Sulfoethylcellulosederivate wird keinerlei Angabe gemacht.

Gemäß US-PS 2,580,352 werden Sulfoethylcelluloseether durch Umsetzung einer alkalischen Polysaccharidsuspension in inerten organischen Lösungsmitteln, wie z.B. Dioxan, Isopropanol, Tertiärbutanol, Tetrahydrofuran, Ethylenglykol. Diethylether, hergestellt. Die in den Beispielen erwähnten Produkte weisen Substitutionsgrade bezüglich Sulfoethyl von DS = 0,175 - 1,03 auf. Die Sulfoethylcelluloseether mit niedrigem DS (DS = 0,175 und 0,21) sind lediglich in verdünnten Laugen löslich. Auf die genaue Lösungsqualität wird nicht eingegangen.

T.Timell (Svensk. Papperstidn. 51, 254 [1948]) beschreibt die Herstellung von SEC mit DS-Werten von 0,07 bis maximal 0.42 durch Umsetzung von Alkalicellulose mit Halogenethansulfonsäure-Natriumsalzen. Die Produkte mit DS-Werten von 0,3 - 0,4 werden als wasserlöslich bezeichnet. Auf die Qualität der Lösungen wird jedoch nicht näher eingegangen.

Nach E.A. Plisko et. al. (Zh. Prikl. Khim. 36, 1994 [1963]) kann die SEC im Kneter ohne Lösungsmittel bzw im Slurryverfahren mit inerten organischen Lösungsmitteln hergestellt werden. Aufgrund des alkalisch oxidativen Abbaus der im Kneter hergestellten SEC bzw. der hohen Temperaturen (80 -130°C) der im Slurryverfahren veretherten Produkte, werden nur Viskositäten von max. 117 mPa.s (1%ige wäßrige Lösung) erhalten. Die Wasserlöslichkeit der Produkte mit Substitutionsgraden < 0,4 liegt bei 95% (DS = 0,27) bzw. 96.6 - 98,2% (DS = 0,32).

Gelkörper- und faserfreie Lösungen können somit auch nach diesem Verfahren nicht erhalten werden.

E.A. Plisko et. al. (Zh. Prikl. Khim. 50, 2003 [1967]) beschreiben die Herstellung von SEC durch Reaktion von Alkalicellulose mit 2-chlorethansulfonsaurem Natriumsalz im Kneter bzw. im Isopropanol-Slurry. Die im Kneter hergestellten Produkte weisen Substitutionsgrade von DS = 0,17 - 0,31 auf. Ihre Löslichkeit in Wasser wird mit 66,71 - 93,48% angegeben. Die im Slurry Verfahren hergestellten Produkte weisen Substitutionsgrade von 0,35 - 0,42 auf. Die Wasserlöslichkeit der Produkte mit einem Substitutionsgrad von <0,4 liegt zwischen 91,8 und 92,3%. Die Produkte mit Substitutionsgraden von 0,4 bzw. 0,42 weisen Wasserlöslichkeiten von 97,2 bzw. 99,2% auf. besitzen somit noch keine vollständige Faser- und Gelkörperfreiheit.

In DE-OS 3 742 104 wird ein Verfahren zur Herstellung einer Sulfoethylcellulose mit hervorragenden Lösungsqualitaten beschrieben und deren Umsetzung mit in der Cellulosechemie üblichen Reagenzien. wie z.B. Chloressigsäure, Ethylenoxid. Propylenoxid, Methyl- bzw. Ethylchlorid, beispielhaft erwähnt. Die Viskosität der Lösungen wird mit 15.000 - 60.000 mPa's angegeben. Hierbei liegt jedoch der durchschnittliche Substitutionsgrad (DS) bezüglich Sulfoethyl im Bereich von DS = 0,4 - 1,4, liegt damit also in einem Bereich, in dem bereits eine sehr gute Wasserlöslichkeit besteht.

In der US-PS 3,357,971 wird ein Verfahren zur Herstellung gemischter, in kaltem Wasser löslicher, ionischer, thermoplastischer Cellulosemischether beschrieben. Als nicht ionischer Substituent wirkt hierbei die Hydroxypropylgruppe. Als Zweitsubstituenten fungieren u.a. Carboxy-, Dialkylamino- und Sulfoalkylierungs- bzw. Sulfatierungsgruppen.

Der molare Substitutionsgrad (MS) bezüglich Hydroxypropyl wird mit > 2, insbesondere aber 4 bzw. 4,5 angegeben. Der durchschnittliche Substitutionsgrad des ionischen Substituenten liegt zwischen 0,001 und 0,4. Die beispielhaft erwähnten Hydroxypropylsulfoethylcellulosederivate (HPSEC) sind in kaltem Wasser gut löslich, besitzen jedoch aufgrund ihres geringen Sulfoethylsubstitutionsgrades (DS = 0,03 bzw. 0,008) noch thermische Flockpunkte, was besonders bei ihrer Reinigung von Vorteil sein kann (Heißwasserwäsche). Auf die Qualität der Lösungen wird kein Bezug genommen. Bei den beschriebenen Verbindungen handelt es sich jedoch um Derivate, die einen molekularen Substitutionsgrad bezüglich Hydroxypropyl von etwa 4 aufweisen, Es ist literaturbekannt (K. Engelskirchen, in Houben-Weyl's "Makromolekulare Stoffe", Band E 20/III, Seite 2070, Herausgeber A. Barth und J. Falbe, Georg-Thieme-Verlag, Stuttgart/New York [1987]), daß Hydroxypropylcellulosen allein ab einem molekularen Substitutionsgrad von etwa 4 bereits eine sehr gute Wasserlöslichkeit besitzen. Die Viskosität der Lösungen der in den Beispielen erwähnten Hydroxypropylsulfoethylcellulosederivate liegt aufgrund der Reaktionsbedingungen (16stündige Reaktion, Aufarbeitung im sauren Milieu) lediglich bei 570 bzw. 2.000 [mPa.s] (2gew.-%ige wäßrige Lösung, bei einem Schergefälle von D = 2,5 s⁻¹ bei 20°C).

Bei den in EP-A 0 161 607, EP-A 0 126 959, EP-A 0 080 678 und DE-A 3 306 621 beschriebenen wasserlöslichen Cellulosemischethern werden u.a. ionische Hydroxyalkyl-Cellulosemischether mit Carboxyalkyl-, Sulfonoalkyl-, Phosphonoalkyl- sowie N, N-Dialkylaminoalkylgruppen beschrieben. Die in ihrer Viskosität, ihrem Substitutionsgrad, ihrer Ausbeute und ihrer Lösungsqualität nicht näher bezeichneten Produkte werden entweder in Dimethylether bzw. Dimethoxyethan allein oder im Gemisch mit Alkanolen, Alkandiolen und/oder Alkoxyalkanolen hergestellt.

Der vorliegenden Erfindung lag die Aufgabe zugrunde, wasserlösliche, sulfoethylierte Cellulosederivate, Alkyl(AIkyl = Methyl, Ethyl) insbesondere MSEC mit bestimmten Anforderungen herzustellen. Für ein wirtschaftliches und industriell umsetzbares Verfahren zur Herstellung von Celluloseethern ist neben einer hohen Ausbeute an Reagenz, ein möglichst geringer Einsatz an Veretherungsmittel anzustreben. Unter diesem Aspekt sollten Methylsulfoethylcellulosen mit ausgezeichneter Lösungsqualität und geringstmöglichem Einsatz an Veretherungsmitteln hergestellt werden. Überraschenderweise wurde nun gefunden, daß die nach dem erfindungsgemäß hergestellten Verfahren charakterisierten Alkyl(Alkyl= Methyl, Ethyl) sulfoethylcellulosen bereits bei Substitutionsgraden ausgezeichnete Wasserlöslichkeiten zeigen, bei denen die reinen Celluloseether (SEC bzw. MC) noch wasserunlöslich sind bzw. einen hohen Faser- und Gelkörperanteil besitzen.

Sulfoethylcellulosen gelten ab einem Durchschnittssubstitutionsgrad von > 0,3 als wasserlöslich. Methylcellulosen sind im Bereich von DS (Durchschnittssubstitutionsgrad) =1,4 - 2,0 wasserlöslich. Verwiesen sei in diesem Zusammenhang auf das Kapitel "Cellulose Ethers" in Ullmann's Encyclopedia of Industrial Chemistry, Vol. A 5, Seite 468 bzw. 480 (Verlag Chemie, Weinheim, [1986]).

Gegenstand der Erfindung sind Methylsulfoethylcellulosen mit einem DS-Sulfoethyl von kleiner als 0,35.

Gegenstand der Erfindung ist ferner ein Verfahren zur Herstellung solcher wasserlöslicher, anionischer Methylsulfoethylcellulose (MSEC), mit einem durchschnittlichen Substitutionsgrad (DS) mit Sulfoethyl von < 0,35, einem durchschnittlichen Substitutionsgrad (DS) mit Methyl von < 1,4, einer Vskosität von 5-80.000 mPa.s, insbesondere von 100 - 50.000 mPa.s (gemessen in 2 gew.-%iger wäßriger Lösung bei einem Schergefälle von D = 2,5 s⁻¹ bei 20°C) und einer Transmission (gemessen an einer 2gew.-%igen wäßrigen Lösung in einer Küvette mit einer optischen Weglänge von 10 mm mit Licht der Wellenlänge λ = 550 nm) von mehr als 95%, insbesondere mehr als 96 %. Nach dem erfindungsgemäßen Verfahren sind ebenfalls Cellulosemischether in solchen Substitutionsgraden herstellbar (z.B. HPSEC), bei denen die einfachen Celluloseether (z.B. HPC bzw. SEC) noch keine oder eine nur geringe Wasserlöslichkeit besitzen.

Ein besonderes Kriterium der erfindungsgemäß hergestellten MSEC ist ihre ausgezeichnete Lösungsqualität. Gelteilchen und Fasern entstehen durch nicht oder nur teilweise veretherte Cellulosebereiche. Für die gute Wasserlöslichkeit von Celluloseethern ist außer ihrem Durchschnittspolymerisationsgrad (DP) und ihrem Substitutionsgrad die homogene, d.h. gleichmäßige Verteilung der Substituenten entlang der Cellulosekette von großer Bedeutung. Diese regelmäßige Substituentenverteilung ist im wesentlichen von der Alkalisierung abhängig, deren Aufgabe es ist, die mikrofibrilläre Struktur der Cellulosefasern aufzulockern und den Ordnungszustand zu verringern, um damit eine gute Zugänglichkeit für die Reagenzien zu ermöglichen.

Die nach dem erfindungsgemäßen Verfahren hergestellten nach dem weiter unten beschriebenen Meßverfahren charakterisierten, gel- und faserfreien Cellulosederivate werden als Verdickungs-. Dispergier- oder Bindemittel insbesondere dort eingesetzt. wo exzellente Lösungsqualitäten erforderlich sind. wie z.B in der Papier-, Erdöl- oder Textilindustrie sowie der kosmetischen oder pharmazeutischen Industrie. Die Produkte sind im Baustoffbereich, z.B. als Fliesenkleber, als Dispergier- und Suspendiermittel bei Emulsions- und Suspensionspolymerisationen und als Verdikker und Stabilisatoren in tensidhaltigen Systemen, wie z.B. Reinigungsmitteln, aber auch für Dispersionsfarben geeignet.

Das erfindungsgemäße Verfahren zur Herstellung von solcher wasserlöslicher Methylsulfoethylcellulose wird bevorzugt in einem zylindrischen Reaktionsgefäß durchgefürt, das mit einem geeigneten Rühraggregat versehen ist, welches eine ausreichende Durchmischung der heterogenen Reaktionsmasse gewährleistet. Das Reaktionsgefäß ist vorzugsweise geschlossen, um eine Reaktionsführung unter Stickstoffatmosphäre zu gewährleisten. Eine ausreichende Möglichkeit zur Temperierung des Gefäßes ist vorzugsweise ebenfalls vorhanden.

Das Verfahren zur Herstellung einer erfindungsgemäßen Methylsulfoethylcellulose ist dadurch gekennzeichnet, daß das Verfahren in folgenden Stufen durchgeführt wird:
a. Alkalisierung der Cellulose durch Umsetzung von Zellstoff mit Alkali in einem inerten organischen Lösungsmittel, gegebenenfalls in Gegenwart eines Sulfoethylierungsmittels in Anwesenheit einer methylgruppenübertagenden Verbindung.
b. Veretherung der Alkalicellulose in Anwesenheit einer Base mit mindestens einem Veretherungsmittel (Sulfoethylierungsmittel und/oder mit einer methylgruppenübertragende Verbindung), das eine mindestens katalytische Menge einer Base benötigt,
c. gegebenenfalls weitere Veretherung mit einem Veretherungsmittel sowie
d. gegebenenfalls Neutralisation, Filtration und/oder Auswaschen der im Produkt verbliebenen Salze bzw. der Reaktor vorliegenden Menge an Base.

Für die Veretherung kommen insbesondere methylgruppenübertragende Verbindungen wie Dimethylsulfat, Methylbromid, Methyliodid, Methansulfonsäure-methylester, Benzyl-4-sulfonsäure-methylester, Toluol-4-Sulfonsäuremethylester, Trifluormethansulfonsäure-methylester bevorzugt jedoch Methylchlorid infrage. Bevorzugte sulfoethylgruppenübertragende Verbindungen sind Chlorethansulfonsäure, Vinylsulfonsäure und deren Salze, insbesondere Salze der Vinylsulfonsäure, insbesondere deren Natriumsalze.

Als Ausgangsmaterial für das erfindungsgemäße Verfahren werden gemahlene Cellulosen, insbesondere Linters-, Nadelholzsulfit-, Nadelholzsulfat- oder Laubholzzellstoffe verwendet. Die erfindungsgemäßen Methylsulfoethylcellulosen zeichnen sich durch vollständige Wasserloslichkeit aus, d.h. die Produkte besitzen nach dem weiter unten beschriebenen Meßverfahren einen löslichen Anteil von > 99,5%, insbesondere > 99,8%.

Die Herstellung der Methylsulfoethylcellulose erfolgt vorzugsweise in einem Eintopfverfahren, d.h. die Alkalisierung und die Veretherung erfolgen in ein und demselben Aggregat. Es ist ebenfalls möglich, die Alkylsulfoethylcellulose in einem Zweistufenverfahren herzustellen, wobei im ersten Reaktionsschritt eine Sulfoethylcellulose (SEC), vorzugsweise in einem inerten organischen Lösungsmittel hergestellt und nachfolgend z.B. mit Methylchlorid, vorzugsweise im Methylchlorid-Slurry bzw. Gasumlaufverfahren weiter verethert wird. Die Methylsulfoethylcellulose kann ebenso in einem zweistufigen Verfahren hergestellt werden, bei dem die Alkalisierung und die Veretherung mit Methylchlorid in der ersten Stufe in einem geschlossenen Reaktionsgefäß unter Stickstoffatmosphäre bzw. drucklos in einem Gasumlaufverfahren vorgenommen wird. Die sich daran anschließende Veretherung mit dem Sulfoalkylierungsmittel, vorzugsweise Vinylsulfonsäure-Natriumsalz, erfolgt vorzugsweise in einem geschlossenen Reaktionsgefäß unter Stickstoffatmosphäre, vorzugsweise in einem inerten organischen Lösungsmittel.

Die Viskositätsstufen der Produkte lassen sich durch Ausschluß oder Zugabe von oxidierenden Substanzen, wie z.B. Luft, H₂O₂ und/oder Metalloxide und die Auswahl der eingesetzten Zellstoffe, die unterschiedliche Durchschnittspolymerisationgrade aufweisen, einstellen. Die Alkalisierung der Cellulose kann ohne oder, sofern es auf einen extrem niedrigen Fasergehalt ankommt, in Anwesenheit von organischen Lösemitteln vorgenommen werden. Die Alkalisierung wird in der Regel mit einem Alkalimetallhydroxid, insbesondere Natriumhydroxid, vorgenommen. Die Menge von Natriumhydroxid pro Mol Cellulose liegt bei 0,5 - 5,0, insbesondere 3 Mol.

Zur Erzielung faser- und gelkörperfreier, wasserlöslicher Produkte kann die Alkalisierung und Veretherung der Cellulose in Anwesenheit von organischen Lösemitteln vorgenommen werden. Als Suspensionsmittel werden cyclische und/oder acyclische Ether, aromatische und/oder aliphatische Kohlenwasserstoffe allein oder in Verbindung mit aliphatischen Alkoholen oder Ketonen, stickstoff- oder schwefelhaltige Lösungsmittel, wie z.B. Dimethylamid oder Dimethylsulfoxid allein oder in Verbindung mit Formaldehyd oder Alkali- oder Erdalkalimetallsalzen, niedere Alkohole mit vorzugsweise 2 - 5 Kohlenstoffatomen pro Molekül. Ketone sowie Gemische dieser Lösungsmittel eingesetzt. Insbesondere werden nach dem erfindungsgemäßen Verfahren Isopropanol und 2-Methyl-propan-2-ol bzw. Mischungen hiervon verwendet.

Die Alkalisierung der Cellulose wird vorzugsweise mit Natronlauge durchgeführt, wobei ihre Konzentration 18 - 100 Gew.-% betragen soll. Erfindungsgemäß erfolgt die Zugabe der Veretherungsreagenzien entweder vor der Natriumhydroxidzugabe oder nach der Alkalisierungsphase. Zur Veretherung wird das Reaktionsgemisch auf Temperaturen von 50 - 100°C, vorzugsweise 60 - 90°C, aufgeheizt und das eingestellte Temperaturniveau bis zur vollständigen Umsetzung beibehalten. Abhängig von den Temperaturen und des Suspensionsmittels liegen die Veretherungszeiten zwischen 1 und 15 h.

Das nach dem erfindungsgemäßen Verfahren hergestellte Produkt wird ggf. neutralisiert und ggf. vom SlurryMedium abgetrennt (Zentrifugation oder Filtration) und ggf. durch Waschen mit Alkoholen, Alkoholwassergemischen, Ketonen bzw. Ketonwassergemischen von anhaftenden Salzen befreit. Die Reinigung kann, wenn es sich bei der Veretherung um einen Zweistufenprozeß handelt, nach der ersten Stufe mit wäßrig-organischen Lösemitteln, heißem oder kaltem Wasser vorgenommen werden. Da es sich bei den einfachen Celluloseethern (SEC bzw.MC) ggf. um wasserunlösliche Produkte handelt, ist gegebenenfalls eine Reinigung mit kaltem Wasser möglich. Es ist ebenfalls möglich, auf eine Neutralisation zu verzichten und das ggf. überschüssige Alkali durch geeignete wäßrigorganische Lösungsmittelgemische auszuwaschen oder nach ggf. erfolgter Neutralisation, die Mengen an Salz im Produkt zu belassen und damit auf eine Reinigung zu verzichten. Eine eventuell zu erfolgende Reinigung der Methylsulfoethylcellulose ist im wesentlichen von ihrem Einsatzgebiet abhängig. Wenn die Anwendung der Methylsulfoethylcellulose das Auswaschen der gebildeten Salze notwendig macht, kann eine Reinigung mit wäßrig-organischen Lösungsmitteln, vorzugsweise 70 - 100%igem Methanol bzw. Aceton, erfolgen.

### Beispiele

Die im folgenden angegebenen Teile sind Gewichtsteile.

Die Messung der Viskositäten erfolgt mit einem Rotationsviskosimeter Haake, Typ RV 100, System M 500, Meßeinrichtung MV, nach DIN 53019, bei einer Schergeschwindigkeit von D = 2,5 s⁻¹, bei einer Temperatur von 20°C. Es werden jeweils 2gew.-%ige Lösungen in destilliertem Wasser vermessen. Die Transmissionsmessungen erfolgen im einem Hitachi-Spektralphotometer, Modell 101, Hitachi Ltd., Tokio/Japan. Es wurde eine Glasküvette mit 10 mm optischer Weglänge verwendet. Die verwendete Wellenlänge betrug λ= 550 nm. Es wurden jeweils 2gew.-% Lösungen in destilliertem Wasser vermessen. Zur Bestimmung der vollständigen Wasserlöslichkeit wird eine Menge des lufttrokkenen, gereinigten Celluloseethers eingewogen, die 2.000 mg absolut trockener Substanz entspricht, und in 198 ml destilliertem Wasser gelöst. Diese Lösung wird vollständig durch einen bei 120°C gewichtskonstant getrockneten, gewogenen Glasfiltertiegel G 2 abgesaugt. Anschließend wird der Filtertiegel fünfmal mit je 100 ml destilliertem Wasser gewaschen, um anhaftende gelöste Celluloseether zu entfernen. Der Glasfiltertiegel wird erneut bei 120°C gewichtskonstant getrocknet und gewogen. Aus den Differenzen der Wägungen wird der unlösliche Anteil bestimmt und daraus der prozentuale Anteil des löslichen Cellusloseethers errechnet. Im Rahmen der Meßgenauigkeit werden solche Celluloseether als vollständig löslich bezeichnet, die einen wasserlöslichen Anteil von mehr als 99,5%, insbesondere 99,8% aufweisen.

Bei den erfindungsgemäßen Celluloseethern haben die Bezeichnungen DS (durchschnittlicher Substitutionsgrad) und MS (molarer Substitutionsgrad) die übliche Bedeutung:

Jede Anhydroglucoseeinheit der Cellulose besitzt drei Hydroxylgruppen.
DS: Durchschnittsanzahl der in der Cellulose substituierten Hydroxylgruppen pro Anhydroglucoseeinheit.
MS: Durchschnittsanzahl der Mole der mit der Cellulose kombinierten Reaktionspartner pro Anhydroglucoseeinheit.

### Beispiel 1

68.6 g eines fein gemahlenen Fichtensulfitzellstoffes (Trockengehalt: 94,5 %) werden in einem Druckreaktor mit einem wandgängigen Flügelrührer vorgelegt. Nach Eingabe von 1.370 ml tertiär-Butanol und 11,9 ml Wasser wird der Reaktor mit Stickstoff gespült und 15 min lang gründlich durchmischt. Danach werden 62,9 ml einer 50gew.-%igen Natriumhydroxidlösung aufgedüst und anschließend 80 min lang bei 25 - 30°C alkalisiert. Nach Zugabe von 133 ml Methylchlorid wird innerhalb von 60 min auf 74°C erwärmt. Diese Temperatur wird unter ständigem Weiterrühren 30 min lang gehalten. Anschließend werden 89,5 ml einer 44.1-gew.-%igen wäßrigen Vinylsulfonsäure-Natriumsalzlösung aufgedüst und die Mischung für weitere 210 min bei 74°C intensiv durchmischt. Das Produkt wird abfiltriert und viermal mit je 2.000 Teilen Methanol und einmal mit 2.000 Teilen Ethanol gewaschen. Die Produktdaten sind Tabelle 1 zu entnehmen.

### Beispiel 2

68,9 g eines fein gemahlenen Fichtensulfitzellstoffes (Trockengehalt: 94,19 %) werden in einem Druckreaktor mit einem wandgängigen Flügelrührer vorgelegt. Nach Eingabe von 1.370 ml tertiär-Butanol und 103,6 g einer 25,1 gew.-%igen Vinylsulfonsäure-Natriumsalzlösung wird der Reaktor mit Stickstoff gespült. 133 ml Methylchlorid und 62,9 ml einer 50gew.-%igen Natriumhydroxidlösung werden nachfolgend aufgedüst. Anschließend wird 80 min bei 25 - 30°C alkalisiert. Dabei wird die Reaktionsmischung gründlich durchmischt. Innerhalb von 60 min wird auf 74°C erwärmt. Diese Temperatur wird unter ständigem Rühren 180 min lang gehalten. Das Produkt wird abfiltriert und viermal mit je 2.000 Teilen Methanol und einmal mit 2.000 Teilen Ethanol gewaschen und an der Luft getrocknet Die Produktdaten sind Tabelle 1 zu entnehmen.

### Beispiel 3

68,6 g eines fein gemahlenen Fichtensulfitzellstoffes (Trockengehalt: 94,5 %) werden in einem Druckreaktor mit einem wandgängigen Flügelrührer in 1.370 ml tertiär-Butanol suspendiert. Anschließend werden 54,1 g einer 48,1 gew.-%igen wäßrigen Vinysulfonsäure-Natriumsalzlösung hinzugegeben und der Reaktor mit Stickstoff gespült. Die Mischung wird 15 min lang gut gerührt. Danach werden 145,7 g einer 32,9gew.-%igen Natriumhydroxidlösung und 133 ml Methylchlorid aufgedüst und 80 min lang bei 25 - 30°C alkalisiert. Danach wird innerhalb von 60 min auf 74°C erhitzt und diese Temperatur 180 min lang gehalten. Das Produkt wird abfiltriert, viermal mit je 2.000 Teilen Methanol und einmal mit 2.000 Teilen Ethanol gewaschen und an der Luft getrocknet. Die Produktdaten sind Tabelle 1 zu entnehmen.

### Beispiel 4

258,22 g eines fein gemahlenen Fichtensulfitzellstoffes (Trockengehalt: 96,02 %) werden in einem Druckreaktor mit einem wandgängigen Flügelrührer in 3.630 ml Isopropanol suspendiert. Anschließend werden 693,2 g einer 28,15 gew.-%igen wäßrigen Vinylsulfonsaure-Natriumsalzlösung hinzugegeben und der Reaktor mit Stickstoff gespült. Über ein Schauglas werden 180 g Natriumhydroxid im Stickstoffgegenstrom zugegeben. Anschließend wird 80 min bei 25 - 30°C alkalisiert. Dabei wird die Reaktionsmischung gut gerührt. Dann werden 997,8 ml Methylchlorid aufgedüst und innerhalb von 60 min auf 70°C erwärmt. Diese Temperatur wird unter ständigem Weiterrühren 180 min lang gehalten. Das Produkt wird abfiltriert und sechsmal mit je 2.000 Teilen einer Mischung aus acht Anteilen Aceton und zwei Anteilen Wasser gewaschen. Das Produkt wird an der Luft getrocknet. Die Produktdaten sind Tabelle 1 zu entnehmen.

### Beispiel 5

68,6 g eines fein gemahlenen Fichtensulfitzellstoffes (Trockengehalt: 94,5 %) werden in einem Druckreator mit einem wandgängigen Flügelrührer in 1.370 ml tertiär-Butanol suspendiert. Nach Zugabe von 103,9 g einer 25,0 gew.-%igen Vinylsulfonsäure-Natriumsalzlösung wird der Reaktor mit Stickstoff gespült und die Mischung 15 min lang kräftig gerührt. Dann werden 62,9 ml einer 50 gew.-%igen Natriumhydroxidlösung und 133 ml Methylchlorid aufgedüst. Nachdem bei 25 - 30°C 80 min Fang alkalisiert wurde, wird auf 74°C innerhalb von 60 min aufgeheizt. Diese Temperatur wird 180 min lang gehalten. Das Produkt wird abfiltriert und viermal mit je 2.000 Teilen Methanol und einmal mit 2.000 Teilen Ethanol gewaschen und an der Luft getrocknet. Die Produktdaten sind Tabelle 1 zu entnehmen.

### Beispiel 6

68,6 g eines fein gemahlenen Fichtensulfitzellstoffes (Trockengehalt: 94,5 %) werden in einem Druckreaktor mit einem wandgängigen Flügelrührer in 1.370 ml tertiär-Butanol suspendiert. Der Reaktor wird mit Stickstoff gespült. 46,4 ml einer 46,3 gew.-%igen Natriumhydroxidlösung werden unter Rühren aufgedüst. Die Mischung wird 80 min lang bei 25 - 30°C alkalisiert. Anschließend werden 133 ml Methylchlorid aufgedüst und innerhalb von 60 min auf 74°C erwärmt. Diese Temperatur wird 30 min lang gehalten. Dann werden 122,4 ml einer 45,1 gew.-%igen wäßrigen Vinylsulfonsäure-Natriumsalzlösung aufgedüst. Die Mischung wird noch 210 min lang bei 74°C gerührt. Das Produkt wird abfiltriert und dreimal mit je 2.000 Teilen Methanol und zweimal mit je 2.000 Teilen Ethanol gewaschen und an der Luft getrocknet. Die Produktdaten sind Tabelle 1 zu entnehmen.

### Beispiel 7

64,9 g eines fein gemahlenen Fichtensulfitzellstoffes (Trockengehalt: 94,5 %) werden in einem Druckreaktor mit einem wandgängigen Flügelrührer in 1.370 ml tertiär-Butanol suspendiert. Der Reaktor wird mit Stickstoff gespült. 138,8 g einer 43,58 gew.-%igen Natriumhydroxidlösung werden unter Rühren aufgedüst. Die Mischung wird 80 min bei 25 - 30°C alkalisiert. Anschließend werden unter Rühren 46,7 ml einer 42,6 gew.-%igen wäßrigen Vinylsulfonsauren-Natriumsalzlösung aufgedüst. Die Mischung wird innerhalb von 60 min auf 74°C erwärmt, wobei 60 min bei dieser Temperatur intensiv gerührt wird. Bei 74°C werden 133 ml Methylchlorid unter Rühren aufgedüst. Die Mischung wird noch 180 min bei 74°C gerührt. Das Produkt wird abfiltriert und viermal mit je 2.000 Teilen Methanol und einmal mit 2.000 Teilen Ethanol gewaschen und an der Luft getrocknet. Die Produktdaten sind Tabelle 1 zu entnehmen.

### Vergleichsbeispiele 8 und 9

### Vergleichsbeispiel 8

### Herstellung einer Methylsulfoethylcellulose (MSEC) im Kneter (US-PS 2,132,181)

255,1 g eines fein gemahlenen Linterszellstoffes (Trockengehalt: 95,32%) werden in einem Druckreaktor mit einem wandgängigen Flügelrührer in 600 ml tertiär-Butanol suspendiert und der Reaktor mit Stickstoff gespült. Anschließend werden 63 ml einer 50 gew.-%igen Natriumhydroxidlösung unter Rühren aufgedüst. Nach Zugabe von 194 ml Methylchlorid wird 60 min bei 25 - 30°C alkalisiert. Innerhalb von 60 min wird die Mischung auf 80°C erwärmt, wobei diese Temperatur 120 min lang gehalten wird Das Produkt wird abfiltriert und mit heißem Wasser bis zur Chloridfreiheit gewaschen. 677 g der feuchten Methylcellulose werden in einen Kneter eingegeben und mit 675 g Natriumhydroxid und 363 g Wasser 120 min im Kneter bei 25°C vermischt. Anschließend werden 1.470 g einer 30 gew.-%igen wäßrigen Vinylsulfonsäure-Natriumsalzlösung aufgedüst und 3 h bei 25°C vermischt. Die Mischung wird innerhalb von 15 min auf 65°C erhitzt und bei 65 -70°C während 180 min gut durchmischt. Das Produkt wird abfiltriert und viermal mit je 2.000 Teilen einer Mischung aus acht Anteilen Methanol und zwei Anteilen Wasser gewaschen und anschließend an der Luft getrocknet. Die Produktdaten sind Tabelle 1 zu entnehmen.

### Vergleichsbeispiel 9

### Herstellung einer Methylsulfoethylcellulose (MSEC) aus einer Sulfoethylcellulose (SEC) (DE-OS 3 742 104).

In einem zylindrischen Reaktionsgefäß, das mit einem geeigneten Rühraggregat ausgestattet ist, in geeigneter Weise thermostatisierbar ist, und in dem unter Stickstoffatmosphäre gearbeitet werden kann, werden 127 g Baumwoll-Linters (Trockengehalt: 95,81 %) in 2.190 g Isopropanol suspendiert. Dazu werden 333,5 g einer 42,7 gew.-%igen Lösung vinylsulfonsauren Natriums hinzugegeben. Danach werden 28 ml Wasser und 75.5 g Natriumhydroxid eingegeben und 80 min bei 25 -30°C alkalisiert. Anschließend wird innerhalb von 60 min auf 75°C erwärmt und diese Temperatur 180 min gehalten. Der Ansatz wird durch Zugabe einer äquimolaren Menge konzentrierter Essigsäure neutralisiert und das Produkt abfiltriert. Das Produkt wird fünfmal mit je 2.000 Teilen einer Mischung aus sieben Anteilen Methanol und drei Anteilen Wasser gewaschen und an der Luft getrocknet. 173 g (Trockengehalt: 87,97 %) des Produktes werden in einen Druckreaktor mit einem wandgängigen Flügelrührer eingegeben und der Reaktor mit Stickstoff gespült. 29 g Natriumhydroxid werden in 29 g Wasser gelöst und die Lösung unter ständigem Rühren aufgedüst. Die Mischung wird 80 min bei 25 - 30°C gerührt. 121 g Methylchlorid werden aufgedüst. Innerhalb von 60 min wird auf 75°C erwärmt. Diese Temperatur wird unter ständigem Weiterrühren 230 min lang gehalten. Das Produkt wird abfiltriert und viermal mit je 2.000 Teilen einer Mischung aus acht Anteilen Methanol und zwei Anteilen Wasser gewaschen und an der Luft getrocknet. Die Produktdaten sind Tabelle 1 zu entnehmen.

Die in den Beispielen 1 - 7, aufgeführten nach dem erfindungsgemäßen Herstellverfahren synthetisierten Celluloseether weisen alle Transmissionswerte von deutlich über 95% auf, was ebenfalls in der guten bis ausgezeichneten Gelkörper-und Faserfreiheit der Produkte zum Ausdruck kommt.

Die Vergleichsbeispiele 8 und 9 zeigen, daß, verfahrensbedingt, entweder nur niedrige Viskositäten erhalten werden können (Beispiel 8), wobei die Transmissionswerte auch bei einem weit über 0,3 liegenden Substitutionsgrad bezüglich Sulfoethyl, immer noch deutlich hinter den nach dem erfindungsgemäßen Herstellverfahren synthetisierten Cellulosederivaten zurückbleiben.

Beispiel 9 zeigt, daß die ausgezeichnete Wasserlöslichkeit der erfindungsgemäßen Produkte auch erreicht werden kann, wenn der Substitutionsgrad bezüglich Sulfoethyl deutlich über 0,3 liegt. Dies ist jedoch weder ökonomisch noch überraschend, da die reine Sulfoethylcellulose bereits ab einem Substitutionsgrad von etwa 0,5 hervorragende Wasserlöslichkeit besitzt. (E. A. Plisko et. al., Zh. Prikl. Khim. 36, 1994 [1963], K. Engelskirchen in Houben-Weyl's "Makromolekulare Stoffe", Band E 20/III, S. 2083, Herausgeber A. Barth und J Falbe, Georg-Thieme Verlag, Stuttgart/New York [1987])

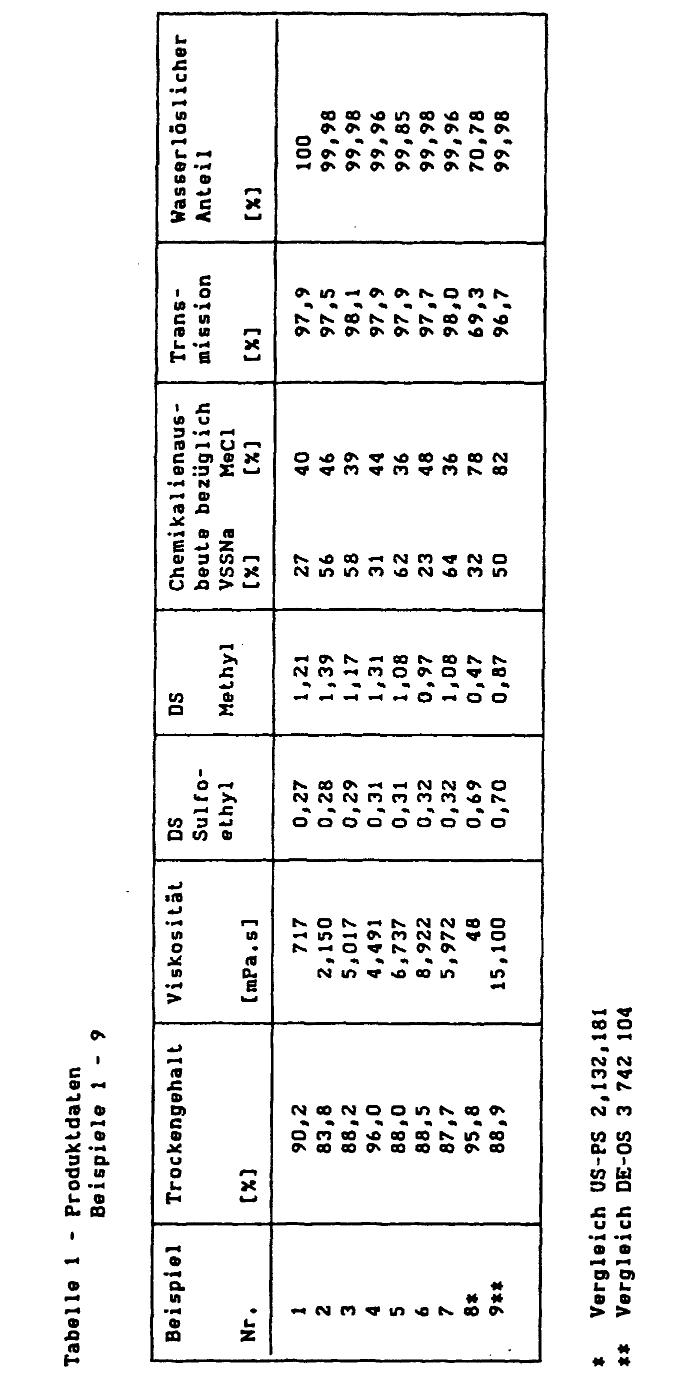

- Trockengehalt:: Rohprodukt (lufttrocken) abzüglich Feuchte, Angabe in Prozent
- Viskosität:: 2 gew.-%ig in destilliertem Wasser, Angabe in mPa.s
- DS:: Substitutionsgrad, Anzahl der Substituenten pro Anhydroglucose-Baustein
- Chemikalienausbeute VSSNa:: Menge des zum Produkt umgesetzten Alkylierungsmittels, Angabe in Prozent des eingesetzten vinylsulfonsauren Natriums (VSSNa)
- Chemikalienausbeute MeCl:: Menge des zum Produkt umgesetzten Alkylierungsmittels, Angabe in Prozent der eingesetzten Base (NaOH)
- Transmission:: Anteil des durchstrahlenden Lichtes in Prozent des eintretenden Lichtes beim Durchgang durch eine mit einer 2 %igen Celluloseether-Lösung gefüllten Küvette. Optische Weglänge der Küvette: 10 [mm], eingesetzte Wellenlänge **λ** = 550 [nm]

## Patentansprüche

1. Methylsulfoethylcellulose (MSEC) mit einem DS-Sulfoethyl von < 0,35 und einem DS-Methyl von < 1,4, einer Viskosität von 5 - 80.000 mPa.s (gemessen in 2 gew.-%iger, wäßriger Lösung bei einem Schergefälle von D =2,5 s⁻¹ bei 20°C) und einer Transmission (gemessen an einer 2 gew.%igen, wäßrigen Lösung in einer Küvette mit einer optischen Weglänge von 10 mm, mit Licht der Wellenlänge λ = 550 nm) von mehr als 96%.

2. Verfahren zur Herstellung einer Methylsulfoethylcellulose nach Anspruch 1, **dadurch gekennzeichnet, daß** das Verfahren in folgenden Stufen durchgeführt wird:
a. Alkalisierung der Cellulose durch Umsetzung von Zellstoff mit Alkali in einem inerten organischen Lösungsmittel, gegebenenfalls in Gegenwart eines Sulfoethylierungsmittels in Anwesenheit einer methylgruppenübertagenden Verbindung.
b. Veretherung der Alkalicellulose in Anwesenheit einer Base mit mindestens einem Veretherungsmittel (Sulfoethylierungsmittel und/oder mit einer methylgruppenübertragende Verbindung), das eine mindestens katalytische Menge einer Base benötigt,
c. gegebenenfalls weitere Veretherung mit einem Veretherungsmittel sowie
d. gegebenenfalls Neutralisation, Filtration und/oder Auswaschen der im Produkt verbliebenen Salze bzw. der Reaktor vorliegenden Menge an Base.

3. Verfahren nach Anspruch 2, **dadurch gekennzeichnet, daß** als Sulfoethylierungsmittel Vinylsulfonsäure bzw. Vinylsulfonsäure-Natriumsalz und als methylgruppenübertragende Verbindung Methylchlorid, eingesetzt wird.

4. Verfahren nach wenigstens einem der vorhergehenden Ansprüche 2 oder 3, **dadurch gekennzeichnet, daß** die Umsetzung in Isopropanol durchgeführt wird.

5. Verfahren nach wenigstens einem der Ansprüche 2-4, **dadurch gekennzeichnet, daß** die Veretherung als Einstufenverfahren durchgeführt wird.

6. Verwendung der Methylsulfoethylcellulose gemäß Anspruch 1 als Verdickungs-, Dispergier- oder Bindemittel.

## Claims

1. Methylsulfoethylcellulose (MSEC) having a sulfoethyl DS of <0.35 and a methyl DS of <1.4, a viscosity of 5-80,000 mPa.s (measured in a 2 wt.% aqueous solution at a shear rate of D = 2.5 s⁻¹ at 20°C) and a transmission (measured in a 2 wt.% aqueous solution in a cell with an optical pathlength of 100 mm using light of wavelength λ = 550 nm) of greater than 96%.

2. Process for the production of a methylsulfoethylcellulose according to claim 1, **characterised in that** the process is performed in the following stages:
a. alkalisation of the cellulose by reaction of cellulose pulp with alkali in an inert organic solvent, optionally in the presence of a sulfoethylating agent in the presence of a compound which transfers methyl groups,
b. etherification of the alkali cellulose in the presence of a base with at least one etherifying agent (sulfoethylating agent and/or with a compound which transfers methyl groups), which requires an at least catalytic quantity of a base;
c. optionally further etherification with an etherifying agent and
d. optionally neutralisation, filtration and/or washing out of the salts remaining in the product or the quantity of base present in the reactor.

3. Process according to claim 2, **characterised in that** vinylsulfonic acid or vinylsulfonic acid sodium salt is used as the sulfoethylating agent, while methyl chloride is used as the compound which transfers methyl groups.

4. Process according to at least one of claims 2 or 3, **characterised in that** the reaction is performed in isopropanol.

5. Process according to at least one of claims 2-4, **characterised in that** etherification is performed as a single stage process.

6. Use of the methylsulfoethylcelluloses according to claim 1 as thickeners, dispersants or binders.

## Revendications

1. Méthylsulfoéthylcellulose (MSEC) ayant un DS-sulfoéthyle inférieur à 0,35, un DS-méthyle inférieur à 1,4, une viscosité de 5 à 80 000 mPa.s (mesurée sur une solution aqueuse à 2% en poids sous un cisaillement D = 2,5 s⁻¹ à 20°C), et un coefficient de transmission (mesuré sur une solution aqueuse à 2% en poids dans une cuvette à trajet optique de 10mm avec de la lumière de longueur d'onde **λ** = 550 nm) supérieur à 96%.

2. Procédé de préparation d'une méthylsulfoéthylcellulose selon la revendication 1, **caractérisé en ce que** le procédé comprend les stades opératoires suivants :
a. formation d'une alcalicellulose par réaction de cellulose avec un alcali dans un solvant organique inerte, éventuellement en présence d'un agent sulfoéthylant en présence d'un composé apportant des groupes méthyle,
b. éthérification de l'alcalicellulose en présence d'une base par au moins un agent éthérifiant (agent sulfoéthylant et/ou composé apportant des groupes méthyle), nécessitant une quantité au moins catalytique d'une base,
c. le cas échéant nouvelle éthérification par un agent éthérifiant et
d. le cas échéant neutralisation, filtration et/ou lavage pour élimination des sels restants dans le produit et de la base présente dans le réacteur.

3. Procédé selon revendication 2, **caractérisé en ce que** l'on utilise en tant qu'agent sulfoéthylant l'acide vinylsulfonique ou le vinylsulfonate de sodium et en tant qu'agent apportant des groupes méthyle le chlorure de méthyle.

4. Procédé selon l'une des revendications précédentes 2 ou 3, **caractérisé en ce que** la réaction est réalisée dans l'isopropanol.

5. Procédé selon au moins une des revendications 2 à 4, **caractérisé en ce que** l'éthérification est réalisée dans une opération à un seul stade.

6. Utilisation de la méthylsulfoéthylcellulose selon la revendication 1 en tant qu'agent épaississant, dispersant ou liant.
